# EUROPEAN PATENT SPECIFICATION

(11) **EP 2 995 513 B1**
(45) Date of publication and mention of the grant of the patent: **15.11.2017**
(21) Application number: 14003136.0
(22) Date of filing: 11.09.2014
(51) Int. Cl.: B60R 21/232

(54) **Gasbag and method for producing a gasbag**
Gasbeutel und Verfahren zur Herstellung eines Gasbeutels
Coussin gonflable et procédé de fabrication associé

(43) Date of publication of application: 16.03.2016
(60) Divisional application: 17192591.0
(73) Proprietor: Dalphi Metal España, S.A., 36213 Vigo (ES)
(72) Inventor: Graña Menduiña, Joaquin, 36209 Vigo (ES)
(74) Representative: ZF TRW Patentabteilung

(56) References cited:
- EP-A2- 0 694 444
- WO-A1-2014/061323
- DE-A1-102005 027 310
- US-A- 5 480 181
- US-A1- 2004 239 083
- US-A1- 2004 239 084

## Description

The present invention relates to a gasbag for a vehicle, more particularly to a gasbag for restraining a vehicle occupant. Such a gasbag is defined by the features in the preamble of Claim 1. Furthermore, the present invention relates to a method for manufacturing a corresponding gasbag.

Gasbags, especially those for restraining occupants, must have a defined position in their inflated state in or with respect to the vehicle in order to provide a predetermined restraint effect.

Most of the known gasbags are attached to the vehicle by being clamped at their inflation opening edge to a housing part of a gasbag module. Driver and passenger front bags are examples for such gasbags.

However, there are gasbags like side curtain bags which are not only attached to the vehicle at their inflation opening but also by additional flexible, elongated holding straps. These holding straps are attached to the gasbag and, on their opposite end, to the vehicle in order to bridge the distance between the gasbag and a corresponding attachment point at the vehicle. In case of an accident, the gasbag is held in position despite of forces applied to the gasbag. Usually, the holding straps are attached to the A-, B-, C- and/or D-pillars. In order to facilitate mounting of the holding strap to the vehicle, an attachment part is fixed to the holding strap. In the prior art, such an attachment part is a lug made of a sheet metal plate. These lugs can be provided with a hook-like protrusion in order to latch the lug into a corresponding opening at the vehicle. For attachment of the lug to the holding strap, the holding strap is firstly threaded through an opening of the lug, and afterwards, the two free ends of the holding strap are multiple folded (zig-zag folding) to form a multi-layer end. This multi-layer end is finally sewed to the outer gasbag wall.

WO 2014/061323 A1 discloses a curtain airbag including a bag-like cushion section that has a chamber being inflatable by means of a gas and an upper edge part being positioned at the upper side of the vehicle when the airbag is inflated. The curtain airbag further includes a separate protective fabric joined to the upper edge part of the cushion section on the vehicle interior-side of the chamber and a tab for attaching the curtain airbag to a roof rail of the vehicle, wherein the upper edge part of the cushion section, the protective fabric and the tab are connected to each other by a seam.

EP 0 694 444 A2 shows an airbag device that includes an airbag fabric having longitudinal edges and a retaining part connecting the airbag device to a car body. In one embodiment of the airbag device, the retaining part and the longitudinal edges of the airbag fabric can be sewn together.

A side impact head strike protection system described in US 5,480,181 A shows all features in the preamble of claim 1, the protection system including an inflatable tubular structure with a braided tube made of continuous fibers and attachment straps to fasten the tubular structure to a car body. Each attachment strap is provided with attachment hardware at one strap end for connection to the car body, whereas an opposite strap end is connected to an end of the braided tube by stitching. The ends of the braided tube are brought together and flattened, essentially forming upper and lower surfaces which are also bound together by stitching.

It is an object of the present invention to provide a gasbag and a method for manufacturing a gasbag allowing to reduce costs and efforts for attaching the holding strap to the outer wall.

This object is achieved by a gasbag for a vehicle, including the features of claim 1. In contrast to the state of the art where the holding strap is sewn to the outer wall by separate stitches or separate seams which are only provided for attachment of the holding straps, the present invention proposes to use the edge seam or edge seams which are already provided for closing the gasbag by attaching opposing wall portions to each other. Therefore, the edge seam now fulfills a double function. This significantly reduces the manufacturing costs.

The edge seam extends along a significant length of the edges of the wall portions, preferably along the whole length of the wall portion edges.

According to one embodiment, the at least one holding strap is attached to the outer wall by the at least one edge seam, only, i.e. there is no additional seam for fixing the holding strap to the outer wall provided.

The attachment part, which is a part manufactured separately from the holding strap, has an inherent rigidity, i.e. its stiffness is greater than the stiffness of the holding strap.

The attachment part can be made of metal or plastics.

If the attachment part has a hook-like protrusion, the protrusion can be inserted into a corresponding opening in the vehicle to accelerate assembly of the gasbag into the vehicle.

The holding strap can be made from a textile, i.e. a textile tape.

In order to facilitate the connection between the holding strap and the attachment part, the attachment part comprises a strap opening through which the holding strap extends. In addition or alternatively to the hook-like protrusion, the attachment part may comprise an attachment opening which allows to use a bolt to fix the attachment part to the vehicle.

According to the invention, the holding strap has two ends which are both attached to the outer wall by the edge seam, so that the holding strap forms a loop.

This loop has a free loop end, which is threaded through the strap opening. Afterwards, the attachment part is threaded through the free loop end protruding through the strap opening of the attachment part to finally define a loop connection. This loop connection allows to fix the attachment part to the holding strap after the holding strap has been sewn to the outer wall of the gasbag. Therefore, the sewing process can be accomplished without the attachment part being already fixed to the holding strap. This significantly improves the handling of the gasbag during the sewing step. Mounting the attachment part to the holding strap is, furthermore, done without any tool or any further sewing step.

The gasbag according to the present invention is, for example, a curtain side bag.

The holding strap is sandwiched between the opposing wall portions of the gasbag. Further, a portion of the holding strap which is attached to the outer wall can be a single layer end, i.e. the end or ends of the holding strap are not folded like in the prior art. This leads to a further reduction of the manufacturing process of the gasbag and, furthermore, reduces the package volume of the folded gasbag.

The present invention further provides a method for manufacturing a gasbag comprising the features of claim 8. Further advantages and features of the present invention will become apparent from the drawings and the description.
- Figure 1 shows a side view of an unfolded gasbag according to one example of the present invention,
- Figure 2 shows a sectional view along line II-II in Figure 1 showing the attachment area of the holding strap at the gasbag outer wall, and
- Figures 3a to 3e show successive steps for fixing the attachment part to the holding strap.

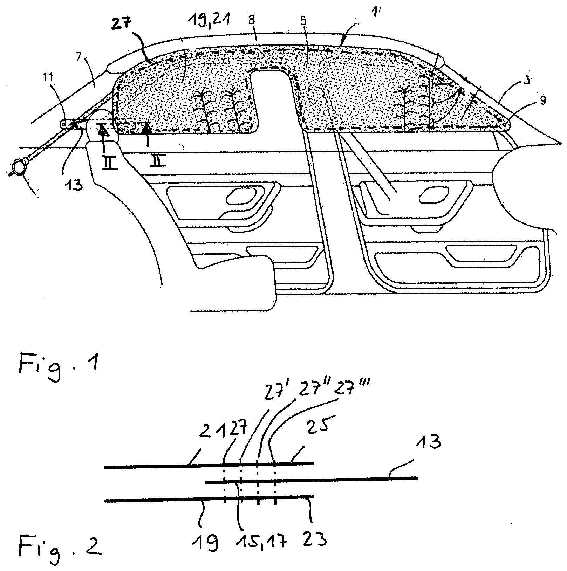

Figure 1 shows a head side curtain gasbag 1 which extends from an A-column 3, covering a B-column 5, and further extending to a C-column 7.

Gasbag 1 is shown in the inflated state in which the gasbag protects the heads of the front and the rear passengers.

In the folded state, the gasbag is partly arranged underneath a cover 8 or lining.

Gasbag 1 is attached along its upper edge at numerous attachment points to the roof column of the vehicle.

In addition, a front attachment point 9 at which the front end of gasbag 1 is attached to the A-column 3 and a rear attachment point 11 for attaching the gasbag 1 to the C-column 7 are provided.

A flexible, elongated holding strap 13 is, at one end, attached to gasbag 1 and, at its opposite end to C-column 7 at attachment point 11.

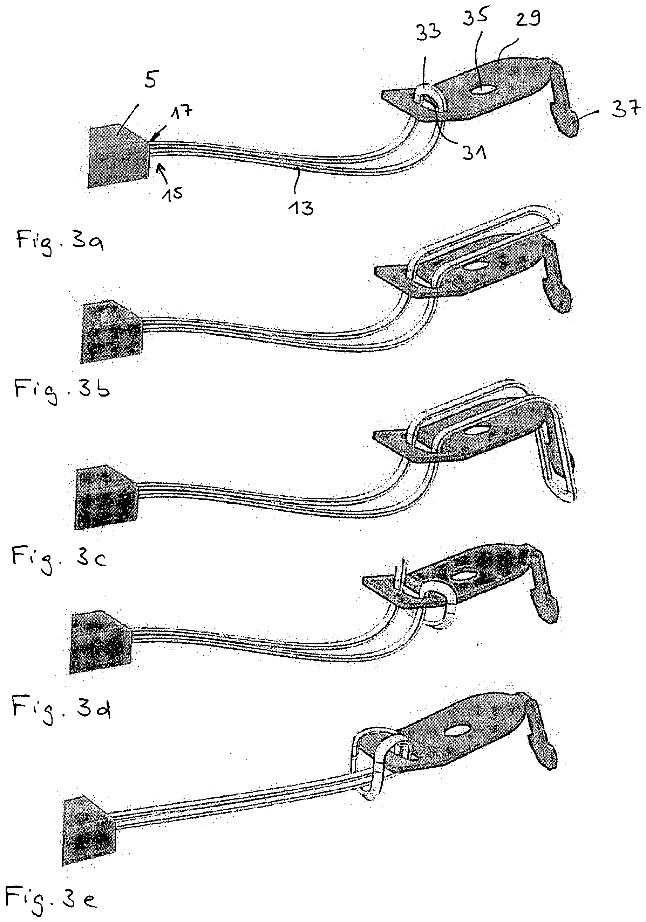

As shown in Figure 3a the holding strap 13 is a flexible, elongated strap, preferably of a textile.

The elongated holding strap 13 has two opposite ends 15, 17, which are both attached adjacent to each other to gasbag 1 so that holding strap 13 forms a loop (see Figure 3a). The gasbag comprises at least two outer opposite walls 19, 21 as shown in Figure 2. Outer walls 19, 21 have outer edges 23, 25 at which they are attached to each other by at least one edge seam 27 extending along the circumferential edges 23, 25. In Figure 2, numerous parallel edge seams 27 to 27''' are shown as an example only, which shall not be limiting.

The two ends 15, 17 of the holding strap are both attached to gasbag 1 by the at least one edge seam 27 to 27''', only.

Furthermore, as can be seen from Figure 2, ends 15, 17 of the holding strap 13 are not folded so that there is only one single layer of the holding strap 13 defining each end 15, 17.

The ends 15, 17 are sandwiched between the edges 23, 25 of the opposing wall portions 19, 21. Holding strap 13 is attached to the gasbag simultaneously with closing the gasbag outer wall by sewing together the opposing wall portions 19, 21 along their edges 23, 25.

Alternatively, the ends 15, 17 are not adjacent to each other rather than are lying on each other. Preferably, however, the edges 15, 17 lying onto each other are also not folded in order to define a single layer, each.

As can be seen from Figure 3a, an attachment part 29 which is preferably made of metal or plastics is secured to the holding strap 13.

The attachment part 29 is for fixing the holding strap 13 to the vehicle and has a plate-like shape.

A strap opening 31 in attachment part 29 allows to thread loop end 33 of the holding strap 13 through the attachment part 29 as can be seen from Figure 3a.

The free loop end 33 is further pulled through the strap opening 31 (see Figure 3b) and, finally, the attachment part 29, more precisely the portion of the attachment part 29 protruding away from the strap opening 31 is threaded through the part of the loop end which protrudes through the strap opening 31 to finally define a loop connection (see subsequent steps in Figures 3c-3e).

The attachment part 19 can be fixed to the vehicle e.g. by an opening 35 through which a bolt extends or by a hook-like protrusion 37 which may be inserted into a key-hole slit in a corresponding part attached to the vehicle or in the vehicle frame.

The loop connection shown in Figure 3e in the form of a knob allows to secure the attachment part 29 to the holding strap 13 after securing the holding strap 13 to the gasbag walls 19, 21.

## Claims

1. Gasbag for a vehicle, having
an outer wall with opposing wall portions (19, 21) being fixed together at their edges (23, 25) by at least one edge seam (27-27'''),
at least one flexible, elongated holding strap (13) for positioning the gasbag (1) in its inflated state, and
an attachment part (29) fixed to the holding strap (13) at the holding strap distanced from the gasbag (1) for mounting the holding strap (13) to the vehicle,
wherein the holding strap (13) is attached to the outer wall by the at least one edge seam (27-27''') for fixing opposite wall portions (23, 25) to each other,
wherein the holding strap (13) has two ends (15, 17) which are both attached to the outer wall by the at least one edge seam (27-27''') so that the holding strap (13) forms a loop,
**characterized in that** the gasbag (1) is a curtain side bag, wherein the holding strap (13) is sandwiched between the opposing wall portions (19, 21), the ends (15, 17) of the holding strap (13) extending into a gasbag interior that is delimited by the wall portions (19, 21) sewn together.

2. Gasbag according claim 1, wherein the attachment part (29) comprises a strap opening (31) through which the holding strap (13) extends,
**characterized in that** the holding strap (13) has a free loop end (33) which is threaded through the strap opening (31) and wherein the attachment part (29) is threaded through the free loop end (33) protruding through the attachment opening (31) to define a loop connection.

3. Gasbag according to claim 1 or 2, **characterized in that** the at least one holding strap (13) is attached to the outer wall by the at least one edge seam (27-27'''), only.

4. Gasbag according to one of the preceding claims, **characterized in that** the attachment part (29) is of metal or plastics.

5. Gasbag according to one of the preceding claims, **characterized in that** the attachment part (29) comprises an attachment opening (35) and/or a hook-like protrusion (37) for attachment to the vehicle.

6. Gasbag according to one of the preceding claims, **characterized in that** the two ends (15, 17) of the holding strap (13) are lying onto each other or are arranged beside each other.

7. Gasbag according to one of the preceding claims, **characterized in that** the portion of the holding strap (13) which is attached to the outer wall is a single layer end.

8. Method for manufacturing a gasbag comprising an outer wall with opposing wall portions (19, 21) each having outer edges (23, 25),
at least one flexible, elongated holding strap (13) for positioning of the gasbag (1) in its inflated state and
an attachment part (29) fixed to the holding strap (13) distanced from the gasbag for mounting the holding strap (13) to the vehicle, **characterized by** the following step:
the holding strap (13) is attached to the outer wall simultaneously with closing the gasbag outer wall by sewing together the opposing wall portions (19, 21) along their outer edges (23, 25) by an edge seam (27-27'''), such that the edge seam (27-27''') simultaneously attaches the wall portions (19, 21) and the holding strap (13) to each other, wherein the holding strap (13) is sandwiched between the opposing wall portions (17, 19), and the ends of the holding strap (13) extending into a gasbag interior that is delimited by the wall portions (19, 21) sewn together.

9. Method according to claim 8, **characterized in that** the holding strap (13) has two ends (15, 17) which are both attached to the outer wall by the edge seam (27-27''') so that the holding strap (13) forms a loop.

10. Method according to claim 9, **characterized in that** the attachment part (29) is fixed to the holding strap (13) by a loop connection, wherein the loop being threaded through a strap opening (31) in the attachment part (29) and wherein the attachment part (29) is threaded through a loop end (33) protruding through the attachment part (29).

11. Method according to any of claims 8-10, **characterised in that** the attachment part (29) is fixed to the holding strap (13) after sewing the edge seam (27-27''').

## Patentansprüche

1. Gasbeutel für ein Fahrzeug, mit
einer Außenwand mit gegenüberliegenden Wandabschnitten (19, 21), die an ihren Rändern (23, 25) durch mindestens eine Randnaht (27-27''') aneinander befestigt sind,
mindestens einem elastischen, länglichen Haltegurt (13) zur Positionierung des Gasbeutels (1) in seinem aufgeblasenen Zustand, und
einem Befestigungsteil (29), der an dem Haltegurt beabstandet von dem Gasbeutel (1) an dem Haltegurt (13) befestigt ist, um den Haltegurt (13) an dem Fahrzeug anzubringen,
wobei der Haltegurt (13) durch die mindestens eine Randnaht (27-27''') an der Außenwand befestigt ist, um gegenüberliegende Wandabschnitte (23, 25) aneinander zu befestigen,
wobei der Haltegurt (13) zwei Enden (15, 17) aufweist, die durch die mindestens eine Randnaht (27-27"") beide derart an der Außenwand angebracht sind, dass der Haltegurt (13) eine Schlaufe bildet,
**dadurch gekennzeichnet, dass** der Gasbeutel (1) aus einem Vorhangseitenbeutel besteht, wobei der Haltegurt (13) zwischen den gegenüberliegenden Wandabschnitten (19, 21) angeordnet ist, wobei sich die Enden (15, 17) des Haltegurtes (13) in einen Gasbeutelinnenraum erstrecken, der von den zusammengenähten Wandabschnitten (19, 21) begrenzt ist.

2. Gasbeutel nach Anspruch 1, wobei der Befestigungsteil (29) eine Gurtöffnung (31) umfasst, durch welche sich der Haltegurt (13) erstreckt,
**dadurch gekennzeichnet, dass** der Haltegurt (13) ein freies Schlaufenende (33) aufweist, das durch die Gurtöffnung (31) hindurch gefädelt ist, und wobei der Befestigungsteil (29) durch das freie Schlaufenende (33) hindurch gefädelt ist, welches durch die Befestigungsöffnung (31) hervorsteht, um eine Schlaufenverbindung festzulegen.

3. Gasbeutel nach Anspruch 1 oder 2, **dadurch gekennzeichnet, dass** der mindestens eine Haltegurt (13) an der Außenwand nur durch die mindestens eine Randnaht (27-27"") angebracht ist.

4. Gasbeutel nach einem der vorhergehenden Ansprüche, **dadurch gekennzeichnet, dass** der Befestigungsteil (29) aus Metall oder Kunststoff besteht.

5. Gasbeutel nach einem der vorhergehenden Ansprüche, **dadurch gekennzeichnet, dass** der Befestigungsteil (29) eine Befestigungsöffnung (35) und/oder einen hakenförmigen Vorsprung (37) zur Anbringung an dem Fahrzeug umfasst.

6. Gasbeutel nach einem der vorhergehenden Ansprüche, **dadurch gekennzeichnet, dass** die zwei Enden (15, 17) des Haltegurtes (13) aufeinanderliegen oder nebeneinander angeordnet sind.

7. Gasbeutel nach einem der vorhergehenden Ansprüche, **dadurch gekennzeichnet, dass** der Abschnitt des Haltegurtes (13), der an der Außenwand angebracht ist, aus einem einlagigen Ende besteht.

8. Verfahren zur Herstellung eines Gasbeutels mit
einer Außenwand mit gegenüberliegenden Wandabschnitten (19, 21), die jeweils Außenkanten (23, 25) aufweisen,
mindestens einem elastischen, länglichen Haltegurt (13) zur Positionierung des Gasbeutels (1) in seinem aufgeblasenen Zustand, und
einem Befestigungsteil (29), der an dem Haltegurt (13) beabstandet von dem Gasbeutel zur Anbringung des Haltegurtes (13) an dem Fahrzeug befestigt ist, **gekennzeichnet durch** den folgenden Schritt:
der Haltegurt (13) wird an der Außenwand gleichzeitig mit dem Verschließen der Außenwand des Gasbeutels angebracht, indem die gegenüberliegenden Wandabschnitte (19, 21) entlang ihrer Außenkanten (23, 25) durch eine Randnaht (27-27''') derart zusammengenäht werden, dass die Randnaht (27-27''') gleichzeitig die Wandabschnitte (19, 21) und den Haltegurt (13) aneinander befestigt, wobei der Haltegurt (13) zwischen den gegenüberliegenden Wandabschnitten (17, 19) und den Enden des Haltegurtes (13) angeordnet ist, die sich in einen Innenraum des Gasbeutels erstrecken, der von den zusammengenähten Wandabschnitten (19, 21) begrenzt ist.

9. Verfahren nach Anspruch 8,
**dadurch gekennzeichnet, dass** der Haltegurt (13) zwei Enden (15, 17) aufweist, die beide durch die Randnaht (27-27''') derart an der Außenwand befestigt werden, dass der Haltegurt (13) eine Schlaufe bildet.

10. Verfahren nach Anspruch 9,
**dadurch gekennzeichnet, dass** der Befestigungsteil (29) über eine Schlaufenverbindung an dem Haltegurt (13) befestigt wird, wobei die Schlaufe durch eine Gurtöffnung (31) in dem Befestigungsteil (29) hindurch gefädelt wird und wobei der Befestigungsteil (29) durch ein Schlaufenende (33) hindurch gefädelt wird, welches durch den Befestigungsteil (29) hervorsteht.

11. Verfahren nach einem der Ansprüche 8 bis 10, **dadurch gekennzeichnet, dass** der Befestigungsteil (29) nach dem Nähen der Randnaht (27-27''') an dem Haltegurt (13) befestigt ist.

## Revendications

1. Sac gonflable pour véhicule, ayant
une paroi extérieure avec des parties de paroi opposées (19, 21) étant fixées ensemble sur leurs bords (23, 25) par au moins une couture de bord (27-27 "'),
au moins une sangle de maintien, allongée, flexible (13) pour positionner le sac gonflable (1) dans son état gonflé et
une pièce de fixation (29) fixée à la sangle de maintien (13) sur la sangle de maintien éloignée du sac gonflable (1) pour monter la sangle de retenue (13) sur le véhicule,
pour lequel la sangle de maintien (13) est fixée à la paroi extérieure par la couture de bord (27-27 ''') pour fixer les parties de paroi opposées (23, 25) l'une par rapport à l'autre, pour lequel la sangle de maintien (13) a deux extrémités (15, 17) qui sont toutes deux fixées à la paroi extérieure par la couture de bord (27-27 ''') de sorte que la sangle de maintien (13) forme une boucle,
**caractérisé en ce que** le sac gonflable (1) est un sac latérale rideau, pour lequel la sangle de maintien (13) est prise en sandwich entre les parties de paroi opposées (19, 21), les extrémités (15, 17) de la sangle de maintien (13) s'étendant à l'intérieur du sac gonflable qui est délimité par les parties de paroi (19, 21) cousues ensemble.

2. Sac gonflable selon la revendication 1, pour lequel la partie de fixation (29) comprend une ouverture de sangle (31) à travers laquelle s'étend la sangle de maintien (13),
**caractérisé en ce que** la sangle de maintien (13) présente une extrémité de boucle libre (33) qui est enfilée à travers l'ouverture de sangle (31) et pour lequel la partie de fixation (29) est enfilée à travers l'extrémité de boucle libre (33) faisant saillie à travers l'ouverture de fixation (31) pour définir une connexion en boucle.

3. Sac gonflable selon la revendication 1 ou 2, **caractérisé en ce qu'**au moins une sangle de maintien (13) est fixée à la paroi extérieure par la seule couture de bord (27-27''').

4. Sac gonflable selon l'une quelconque des revendications précédentes, **caractérisé en ce que** la pièce de fixation (29) est en métal ou en matière plastique.

5. Sac gonflable selon l'une quelconque des revendications précédentes, **caractérisé en ce que** la pièce de fixation (29) comprend une ouverture de fixation (35) et / ou une protubérance en forme de crochet (37) pour la fixation au véhicule.

6. Sac gonflable selon l'une quelconque des revendications précédentes, **caractérisé en ce que** les deux extrémités (15, 17) de la sangle de maintien (13) sont disposées l'une sur l'autre ou sont disposées l'une à côté de l'autre.

7. Sac gonflable selon l'une quelconque des revendications précédentes, **caractérisé en ce que** la partie de la sangle de maintien (13) qui est fixée à la paroi extérieure est une extrémité à une seule couche.

8. Procédé de fabrication d'un sac gonflable comprenant une paroi extérieure avec des parties de paroi opposées (19, 21) ayant chacune des bords extérieurs (23, 25), au moins une sangle de maintien allongée flexible (13) pour le positionnement du sac gonflable (1) dans son état gonflé et
une pièce de fixation (29) fixée à la sangle de maintien (13) éloignée du sac gonflable pour monter la sangle de retenue (13) sur le véhicule, **caractérisé par** l'étape suivante:
la sangle de retenue (13) est fixée à la paroi extérieure simultanément pour fermer la paroi extérieure du sac gonflable en cousant ensemble les parties de paroi opposées (19, 21) le long de leurs bords extérieurs (23, 25) par une couture de bord (27-27 '''), de sorte que la couture de bord (27-27 ''') attache simultanément les parties de paroi (19, 21) et la sangle de maintien (13) les uns par rapport à l'autre, dans lequel la sangle de maintien (13) est prise en sandwich entre les parties de paroi opposées (17, 19) et les extrémités de la sangle de maintien (13) s'étendant dans un intérieur de sac gonflable délimité par les parties de paroi (19, 21) cousues ensemble.

9. Procédé selon la revendication 8, **caractérisé en ce que** la sangle de maintien (13) présente deux extrémités (15, 17) qui sont toutes deux fixées à la paroi extérieure par la couture de bord (27-27 ''') de sorte que la sangle de maintien (13) forme une boucle.

10. Procédé selon la revendication 9, **caractérisé en ce que** la pièce de fixation (29) est fixée à la sangle de maintien (13) par une connexion en boucle, pour lequel la boucle est enfilée dans une ouverture de sangle (31) dans la pièce de fixation (29) et pour lequel la pièce de fixation (29) est enfilée à travers une extrémité de boucle (33) faisant saillie à travers la pièce de fixation (29).

11. Procédé selon l'une quelconque des revendications 8 à 10, **caractérisé en ce que** la pièce de fixation (29) est fixée à la sangle de maintien (13) après couture de la couture de bord (27-27 "').
